(19) Europäisches Patentamt / European Patent Office / Office européen des brevets

(11) **EP 3 730 366 A1**

(12) **EUROPEAN PATENT APPLICATION**
published in accordance with Art. 153(4) EPC

(43) Date of publication:
**28.10.2020 Bulletin 2020/44**

(51) Int Cl.:
*B60W 30/08* (2012.01)   *B60T 7/12* (2006.01)
*B62D 6/00* (2006.01)   *G08G 1/16* (2006.01)
*B62D 101/00* (2006.01)   *B62D 103/00* (2006.01)
*B62D 111/00* (2006.01)   *B62D 113/00* (2006.01)
*B62D 117/00* (2006.01)   *B62D 119/00* (2006.01)
*B62D 137/00* (2006.01)

(21) Application number: **19747757.3**

(22) Date of filing: **24.01.2019**

(86) International application number:
**PCT/JP2019/002167**

(87) International publication number:
**WO 2019/151094 (08.08.2019 Gazette 2019/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.01.2018   JP 2018013821**

(71) Applicant: **MAZDA MOTOR CORPORATION**
**Fuchu-cho, Aki-gun**
**Hiroshima 730-8670 (JP)**

(72) Inventor: **OHMURA, Hiroshi**
**Aki-gun, Hiroshima 730-8670 (JP)**

(74) Representative: **Laufhütte, Dieter**
**Lorenz Seidler Gossel**
**Rechtsanwälte Patentanwälte**
**Partnerschaft mbB**
**Widenmayerstraße 23**
**80538 München (DE)**

(54) **VEHICLE CONTROL SYSTEM**

(57)    Disclosed is a vehicle control system 100 configured to set a speed distribution area 40 defining the distribution of an upper-limit relative speed $V_{lim}$ around a given object, and executes speed control and/or steering control of a vehicle 1 so as to prevent a relative speed of the vehicle 1 with respect to the object from exceeding the upper-limit relative speed $V_{lim}$ defined in the speed distribution area 40, wherein the vehicle control system 100 is configured to estimate the degree of visibility of a driver of the vehicle 1 based on external information (e.g., wiper operating state and light intensity) acquired by an external state detection sensor (e.g., a wiper sensor 26 and a light intensity sensor 27) (S21, S22, S24), and change the distribution of the upper-limit relative speed $V_{lim}$ in the speed distribution area 40 according to the estimated degree of the visibility.

FIG.8B

EP 3 730 366 A1

**Description**

TECHNICAL FIELD

The present invention relates to a vehicle control system, and more particularly to a vehicle control system for supporting traveling of a vehicle.

BACKGROUND ART

Heretofore, various vehicle traveling support devices have been proposed. For example, a vehicle traveling support device described in the following Patent Document 1 is configured to set a safe distance between a vehicle and an object, and execute vehicle deceleration control and/or steering control so as to prevent an actual distance between the vehicle and the object from becoming less than the safe distance.

In this traveling support device, the safe distance between the vehicle and an object is set such that a collision with the object can be avoided therewithin by means of steering and/or braking performed by driver's manipulation and/or automatic control. Thus, for example, even in a situation where the vehicle passes by and overtakes an object (other vehicle or the like), it is considered to become possible to ensure at least the safe distance between the vehicle and the object, thereby avoiding a collision or contact with the object.

CITATION LIST

[Patent Document]

Patent Document 1: JP 2006-218935A

SUMMARY OF INVENTION

[Technical Problem]

When the vehicle overtakes an object, as mentioned above, a clearance (lateral distance) between the vehicle and the object needs to be greater than at least a given distance which allows avoidance of a collision and contact therebetween. In addition, the lateral distance is desirably a distance which allows a driver of the vehicle (and the object) to feel safe and secure.

However, visibility of the driver changes depending on a change in external environment due to weather (rainfall, snowfall, fog, etc.) and clock time/lightness (early-evening, night-time, etc.). Then, when the visibility changes, the distance which allows the driver to feel safe and secure also changes. That is, in a situation where the visibility is lowered due to rain or darkness, even if the vehicle passes by an object at the distance which allows the driver to feel safe and secure under good visibility, the driver is likely not to feel safe and secure.

The present invention has been made to solve the above problem, and an object thereof is to provide a vehicle control system capable of realizing a situation where a vehicle can pass by an object in a manner allowing a driver to feel safe and secure even if visibility of the driver is lowered.

[Solution to Technical Problem]

In order to achieve the above object, the present invention provides a vehicle control system provided in a vehicle. The vehicle control system comprises: an obstacle detection sensor configured to detect an object; and a vehicle control device configured to, when the vehicle travels around the object, set, in at least a part of a region between the vehicle and the object, a speed distribution area in which an upper-limit relative speed of the vehicle with respect to the object is set such that it becomes smaller as approaching the object, and execute vehicle speed control and/or steering control of the vehicle so as to prevent a relative speed of the vehicle with respect to the object from exceeding the upper-limit relative speed in the speed distribution area, wherein the vehicle control system further comprises an external state detection sensor configured to acquire external information regarding a state of an outside of the vehicle which exerts an influence on visibility of a driver of the vehicle, and wherein the vehicle control device is configured to estimate a degree of the visibility of the driver of the vehicle, based on the external information acquired by the external state detection sensor, and change the upper-limit relative speed in the speed distribution area, according to the estimated degree of the visibility.

In the vehicle control system of the present invention having the above feature, the distribution of the upper-limit relative speed of the vehicle with respect to the object in the speed distribution area can be changed according to a change in visibility of the driver. This makes it possible to set a distance between the object and the vehicle when the vehicle passes by the object, while taking into account the visibility.

Preferably, in the vehicle control system of the present invention, the vehicle control device is configured to set the upper-limit relative speed at the same distance from the object in the speed distribution area, such that it becomes smaller as the degree of the visibility becomes lower.

In a situation where the visibility is relatively low, the relative speed which allows the driver of the vehicle to feel secure and safe becomes lower. Thus, according to the above feature, in the situation where the visibility is relatively low, the upper-limit relative speed is set to a smaller value, so that it is possible to realize a situation where the vehicle can pass by the object in a manner allowing the driver pf the vehicle to feel secure and safe even if the visibility is lowered.

Preferably, the vehicle control system of the present invention, the speed distribution area defines the upper-limit relative speed according to a lateral distance from the object, and the vehicle control device is configured to change a relationship between the lateral distance from the object and the upper-limit relative speed, according to the degree of the visibility.

The relative speed which allows the driver of the vehicle to feel safe and secure when the vehicle passes by the object relies on the lateral distance between the object and the vehicle. Thus, according to the above feature, at least the relationship between the lateral distance and the upper-limit relative speed is changed according to the degree of the visibility, so that it is possible to appropriately define the upper-limit relative speed according to the degree of the visibility.

Preferably, in the vehicle control system of the present invention, the external information includes at least one of weather, clock time, and lightness outside the vehicle.

According to this feature, it is possible to take into account at least one of weather (rainy weather, etc.), clock time (early-evening, night-time, etc.), and lightness outside the vehicle, as a factor exerting an influence on the visibility.

[Effect of Invention]

The present invention can provide a vehicle control system capable of realizing the situation where the vehicle can pass by the object in a manner allowing the driver to feel safe and secure even if the visibility is lowered.

BRIEF DESCRIPTION OF DRAWINGS

FIG. 1 is a block diagram of a vehicle control system according to one embodiment of the present invention.

FIG. 2 is an explanatory diagram of obstacle avoidance control according to this embodiment.

FIG. 3 is a graph showing a relationship between a permissible upper limit of a relative speed of a vehicle with respect to an obstacle and a clearance between the vehicle and the obstacle, in this embodiment.

FIG. 4 is an explanatory diagram of traveling course correction processing in this embodiment.

FIG. 5 is an explanatory diagram of a vehicle model in this embodiment.

FIG. 6 is an explanatory diagram of an entry prohibition zone in this embodiment.

FIG. 7A is an explanatory diagram of setting of a speed distribution area in a situation where visibility is good, in this embodiment.

FIG. 7B is an explanatory diagram of setting of the speed distribution area in the situation where visibility is good, in this embodiment.

FIG. 8A is an explanatory diagram of setting of the speed distribution area in a situation where visibility is bad, in this embodiment.

FIG. 8B is an explanatory diagram of setting of the speed distribution area in the situation where visibility is bad, in this embodiment.

FIG. 9 is a flowchart of processing to be executed by a vehicle control device in this embodiment.

FIG. 10 is a flowchart of processing of setting a gain coefficient for use in setting of the speed distribution area, in this embodiment.

DESCRIPTION OF EMBODIMENTS

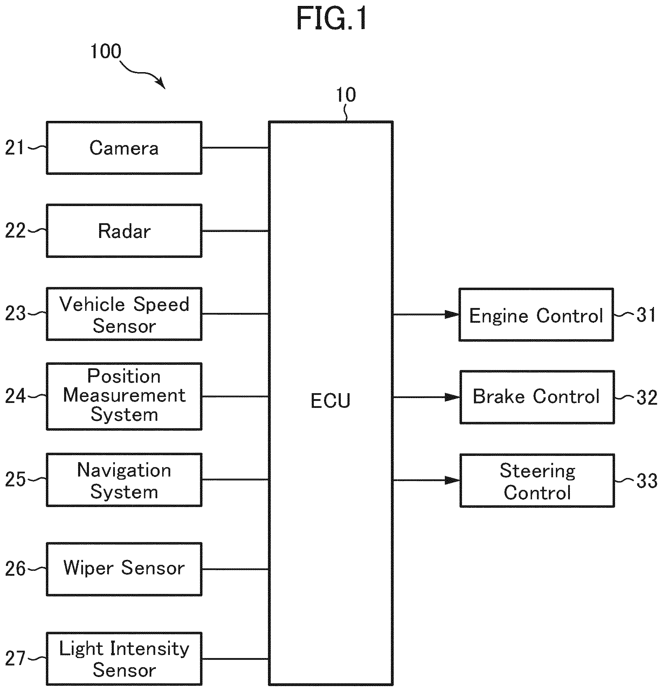

With reference to the accompanying drawings, a vehicle control system according to one embodiment of the present invention will be described. First of all, with reference to FIG. 1, the configuration of the vehicle control system will be described. FIG. 1 is a block diagram of the vehicle control system.

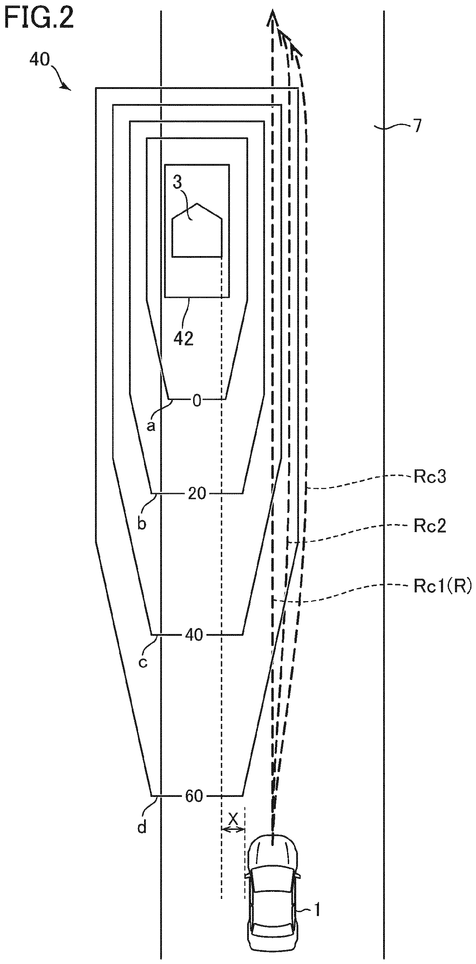

As shown in FIG. 1, the vehicle control system 100 is provided in a vehicle 1 (see FIG. 2), and comprises a vehicle control device (ECU) 10, a plurality of sensors, and a plurality of control sub-systems. The plurality of sensors includes a vehicle-mounted camera 21, a millimeter-wave radar 22, a vehicle speed sensor 23, a position measurement system 24, a navigation system 25, a wiper sensor 26, and a light intensity sensor 27. Further, the plurality of control sub-systems includes an engine control system 31, a brake control system 32 and a steering control system 33.

The ECU 10 is composed of a computer device comprising a processor, a memory storing therein various programs, and an input/output device. The ECU 10 is configured to be operable, based on signals received from the plurality of sensors, to output request signals, respectively, to the engine control system 31, the brake control system 32 and the steering control system 33 to appropriately operate an engine system, a brake system and a steering system. For this purpose, the ECU 10 functionally comprises a data acquisition part, an object detection part, an object detection part, a position and relative speed calculation part, a speed distribution area setting part, a course calculation part, and a traveling control execution part.

The vehicle-mounted camera 21 is operable to capture an image of surroundings of the vehicle 1 and output data about the captured image. The ECU 10 is operable to identify an object (e.g., a vehicle, a pedestrian, a structural object) based on the image data. Here, the ECU 10 is capable of identifying a travelling direction or a forward-rearward direction of the object from the image data.

The millimeter-wave radar 22 is a measurement device for measuring the position and speed of the object (particularly, a preceding vehicle, a parked vehicle, a pedestrian, an obstacle, a road structural object, or the like), and is operable to transmit a radio wave (transmitted wave) forwardly with respect to the vehicle 1 and receive a reflected wave produced as a result of reflection of the transmitted wave by the object. Then, the millimeter-wave radar 22 is operable, based on the transmitted wave and the received wave, to measure a distance between the vehicle 1 and the object, i.e., a vehicle-object distance, (e.g., inter-vehicle distance), a relative speed of the object with respect to the vehicle 1, and/or an existence area or a size (width dimension) of the object. Here, in this embodiment, instead of the millimeter-wave radar 22, a laser radar, an ultrasonic sensor, a vehicle-mounted camera or the like may be used to measure the distance and the relative speed with respect to the object, and/or the existence area or size of the object. Further, the measurement device for the position, speed and existence area of the object may be composed using a plurality of sensors. In this embodiment, the vehicle-mounted camera 21 and/or the millimeter-wave radar 22 are equivalent to the obstacle detection sensor as set forth in the appended claims.

The vehicle speed sensor 23 is operable to calculate the absolute speed of the vehicle 1.

The position measurement system 24 is composed of a GPS system and/or a gyro system, and is operable to calculate the position (current vehicle position information) of the vehicle 1.

The navigation system 25 stores therein map information, and is operable to provide the map information to the ECU 10. Then, the ECU 10 is operable, based on the map information and the current vehicle position information, to identify roads, traffic signals, buildings and others existing around the vehicle 1 (particularly, a forward area of the vehicle 1 in the travelling direction). It should be understood that the map information may be stored in the ECU 10.

The wiper sensor 26 is operable to output an operating signal indicative of an operating state of a wiper. Specifically, an ON signal is output during an operating state of the wiper, whereas an OFF signal is output during a non-operating state of the wiper. The ECU 10 is operable, in response to receiving the ON signal, to determine that it is rainy weather.

The light intensity sensor 27 is operable to measure lightness (light intensity) of the outside of the vehicle 1, and output a measurement signal according to the external light intensity. In this embodiment, the wiper sensor 26 and the light intensity sensor 27 correspond to the external state detection sensor as set forth in the appended claims.

The engine control system 31 comprises a controller for controlling an engine of the vehicle 1. The ECU 10 is operable, when there is a need to accelerate or decelerate the vehicle 1, to output, to the engine control system 31, an engine output change request signal for requesting to change an engine output.

The brake control system 32 comprises a controller for controlling a brake device of the vehicle 1. The ECU 10 is operable, when there is a need to decelerate the vehicle 1, to output, to the brake control system 32, a braking request signal for requesting to generate a braking force to be applied to the vehicle 1.

The steering control system 33 comprises a controller for controlling a steering device of the vehicle 1. The ECU 10 is operable, when there is a need to change a travelling direction of the vehicle 1, to output, to the steering control system 33, a steering direction change request signal for requesting to change a steering direction.

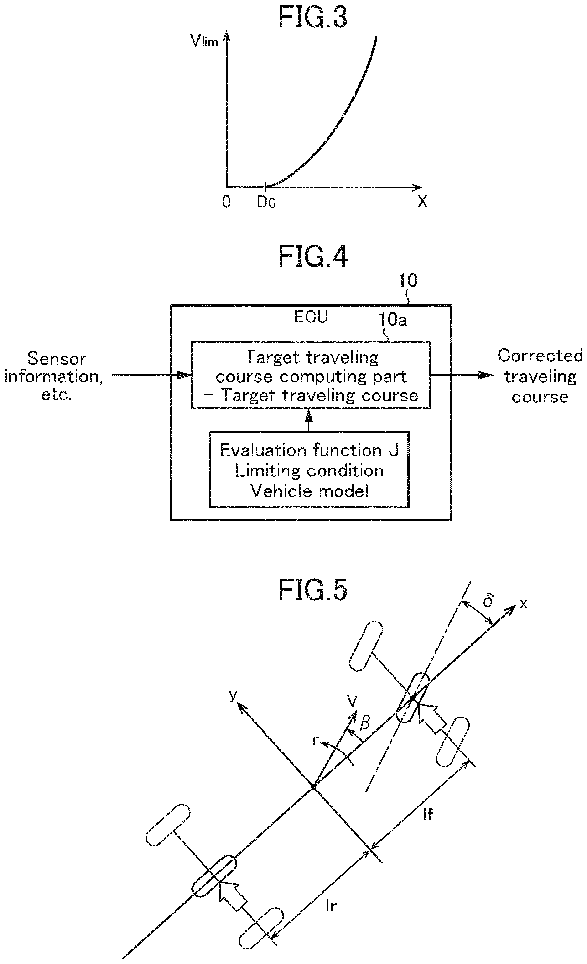

Next, with reference to FIGS. 2 to 5, target traveling course calculating processing to be executed by a vehicle control system 100 according to this embodiment will be described. FIG. 2 is an explanatory diagram of obstacle avoidance control, and FIG. 3 is an explanatory diagram graphically showing a relationship between a permissible upper limit of a pass-by speed and a clearance between an obstacle and a vehicle, during the obstacle avoidance control. FIG. 4 is an explanatory diagram of traveling course correction processing, and FIG. 5 is an explanatory diagram of a vehicle model.

In FIG. 2, the vehicle 1 is traveling on a traveling road (lane) 7, and is just about to pass and overtake a parked vehicle 3 traveling or parked.

Generally, when the vehicle 1 passes by (or overtakes) an obstacle (e.g., a preceding vehicle, a parked vehicle, a pedestrian, or a structural object) on or near a road, a driver of the vehicle 1 keeps a given clearance (lateral distance) between the vehicle 1 and the obstacle in a lateral direction orthogonal to the travelling direction, and reduces a vehicle speed of the vehicle 1 to a value which allows the driver to feel safe. Specifically, in order to avoid dangers such as a situation where a preceding vehicle suddenly changes a course, a situation where a pedestrian comes out from a blind spot, and a situation where a door of a parked vehicle is suddenly opened, a relative speed of the vehicle 1 with respect to the obstacle is set to a lower value as the clearance becomes smaller.

On the other hand, generally, when the vehicle 1 is approaching a preceding vehicle from behind the preceding vehicle, the driver of the vehicle 1 adjusts the vehicle speed (relative speed) according to the inter-vehicle distance (longitudinal distance) along the travelling direction. Specifically, when the inter-vehicle distance is relatively large, an approaching speed (relative speed) is maintained relatively high. However, when the inter-vehicle distance becomes relatively small, the approaching speed is set to a lower value. Subsequently, at a given inter-vehicle distance, the relative speed between the two vehicles is set to zero. This action is also taken in the same manner when the preceding vehicle is a parked vehicle.

As above, the driver drives the vehicle 1 in such a manner as to avoid dangers, while taking into account a relationship between the distance (including the lateral distance and the longitudinal distance) and the relative speed between the obstacle and the vehicle 1.

Here, in this embodiment, as shown in FIG. 2, the vehicle 1 is configured to set, around (over a lateral region, a rearward region and a forward region of) an obstacle (e.g., a parked vehicle 3) detected by the vehicle 1, or in at least a part of a region between the obstacle and the vehicle 1, a two-dimensional distribution (speed distribution area 40) defining a permissible upper limit of the relative speed (hereinafter also referred to as "upper-limit relative speed") of the vehicle 1 with respect to the obstacle in the traveling direction of the vehicle 1. In the speed distribution area 40, the permissible upper limit $V_{lim}$ of the relative speed (upper-limit relative speed $V_{lim}$) is set at each of plural points around the obstacle. In this embodiment, during automatic driving support control, obstacle avoidance control is executed to prevent the relative speed of the vehicle 1 with respect to the obstacle from exceeding the permissible upper limit $V_{lim}$ in the speed distribution area 40.

As can be understood from FIG. 2, in principle, the speed distribution area 40 is set such that the permissible upper limit of the relative speed becomes smaller as the lateral distance and the longitudinal distance from the obstacle becomes smaller (as approaching the obstacle). In FIG. 2, for the sake of facilitating understanding, four constant relative speed lines each connecting points having the same permissible upper limit are illustrated. The constant relative speed lines a, b, c, d correspond, respectively, to four lines on which the permissible upper limit $V_{lim}$ is 0 km/h, 20 km/h, 40 km/h and 60 km/h. In this example illustrated in FIG. 2, each of four constant relative speed zones is set to have an approximately rectangular shape. Further, an entry prohibition zone 42 is set between the constant relative speed line a and the obstacle

Here, the speed distribution area 40 does not necessarily have to be set over the entire circumference of the obstacle, but may be set at least in a region rearward of the obstacle and on one of opposite lateral sides of the obstacle on which the vehicle 1 exists (in FIG. 2, on the right side of the parked vehicle 3).

As shown in FIG. 3, when the vehicle 1 is traveling at a certain absolute speed, the permissible upper limit $V_{lim}$ set in the lateral direction of the obstacle is kept at zero km/h when the clearance X is less than Do (safe distance), and then quadratically increases when the clearance X becomes equal to or greater than Do ($V_{lim} = k (X - D_0)^2$, where $X \geq$ Do). That is, when the clearance X is less than Do, the relative speed of the vehicle 1 becomes zero so as to ensure safety. On the other hand, when the clearance X is equal to or greater than Do, the vehicle 1 is allowed to pass by the obstacle at a larger relative speed as the clearance becomes larger.

In the example illustrated in FIG. 3, the permissible upper limit $V_{lim}$ in the lateral direction of the obstacle is defined as follows: $V_{lim} = f(X) = k (X - D_0)^2$. In this formula, k denotes a gain coefficient (constant) related to the degree of change of $V_{lim}$ with respect to X. Similarly, Do is also a constant. Alternatively, each of k and Do may be set depending on a category of an obstacle or the like.

In this embodiment, $V_{lim}$ is defined as a quadratic function of X, as mentioned above. Alternatively, $V_{lim}$ may be defined as another function (e.g., a linear function). Further, the permissible upper limit $V_{lim}$ has been described about a region thereof in the lateral direction of the obstacle with reference to FIG. 3, it can be set in the remaining region in all radial directions of the obstacle including the longitudinal direction, in the same manner. In such a case, the coefficient k and the safe distance Do may be set depending on a direction from the obstacle.

The speed distribution area 40 can be set based on various parameters. Examples of the parameter may include the relative speed between the vehicle 1 and an obstacle, the traveling direction of the vehicle 1, a moving direction and a moving speed of the obstacle, the length of the obstacle, and the absolute vehicle speed of the vehicle 1. That is, based on these parameters, the coefficient k and the safe distance Do can be selected. Further, the category of the obstacle may be taken into account.

In this embodiment, the obstacle includes a vehicle, a pedestrian, a bicycle, a cliff, a trench, a hole and a fallen object. The vehicle can be classified into a passenger vehicle, a truck, and a motorcycle. The pedestrian can be classified into an adult, a child and a group. Particularly, in this embodiment, the obstacle can be classified into three categories:

vehicle; pedestrian (including bicycle); and on-road stationary structural object (guardrail, utility pole, edge stone, wall and the like).

As shown in FIG. 2, when the vehicle 1 is traveling on the traveling road 7, the ECU 10 of the vehicle 1 operates to detect an obstacle (parked vehicle 3) based on the image data from the vehicle-mounted camera 21. At this moment, the category of obstacle (in this example, vehicle) is identified.

Further, the ECU 10 operates to calculate the position, relative speed (and absolute value) and the size of the obstacle (parked vehicle 3) with respect to the vehicle 1, based on the measurement data from the millimeter-wave radar 22 and vehicle speed data from the vehicle speed sensor 23. Here, the position of the obstacle includes a y-directional position (longitudinal distance) along the traveling direction of the vehicle 1, and an x-directional position (lateral distance) along the lateral direction orthogonal to the traveling direction.

The ECU 10 operates to set the speed distribution area 40 with respect to each of one or more detected obstacles (in FIG. 2, the parked vehicle 3). Then, the ECU 10 operates to perform the obstacle avoidance control so as to prevent the vehicle speed of the vehicle 1 from exceeding the permissible upper limit Viim in the speed distribution area 40. For this purpose, along with the obstacle avoidance control, the ECU 10 operates to correct a target traveling course. The target traveling course (including target positions and a target speed) is calculated by the ECU 10, at time intervals of a given cycle time (e.g., 0.1 to 0.3 sec). For example, the target traveling course is set to cause the vehicle 1 to travel along widthwise middle positions of the traveling road 7 at a given speed (user setup speed, traffic sign-designated speed or the like).

Specifically, in a situation where, if the vehicle 1 travels along the target traveling course, the target speed exceeds the permissible upper limit defined in the speed distribution area 40, at a certain one of the target positions, the target speed is reduced without changing the target positions (course Rc1 in FIG. 2), or the target positions are changed to positions on a bypass course so as to prevent the target speed from exceeding the permissible upper limit, without changing the target speed (course Rc3 in FIG. 2) or both the target positions and the target speed are changed (course Rc2 in FIG. 2).

As one example, FIG. 2 shows a case where the calculated target traveling course R is set to cause the vehicle 1 to travel along the widthwise middle positions of the traveling road 7 (target positions) at 60 km/h (target speed). In this case, the parked vehicle 3 as the obstacle exists ahead of the vehicle 1. However, in a step of calculating the target traveling course R, this obstacle is not taken into account to reduce the calculation load, as mentioned above.

If the vehicle 1 travels along the target traveling course R, it will cut across the constant relative speed lines d, c, c, d of the speed distribution area 40, in this order. That is, the vehicle 1 traveling at 60 km/h enters a region inside the constant relative speed line d (permissible upper limit $V_{lim}$ = 60 km/h). Thus, the ECU 10 operates to correct the target traveling course R so as to restrict the target speed at each target position on the target traveling course R to the permissible upper limit $V_{lim}$ or less, thereby forming the corrected target traveling course (corrected traveling course candidate) Rc1. Specifically, in the corrected target traveling course Rc1, as the vehicle 1 approaches the parked vehicle 3, the target speed is reduced to become equal to or less than the permissible upper limit $V_{lim}$ at each target position, i.e., gradually reduced to less than 40 km/h, and then, as the vehicle 1 travels away from the parked vehicle 3, the target speed is gradually increased to 60 km/h as the original speed.

The corrected target traveling course (corrected traveling course candidate) Rc3 is a course which is set to cause the vehicle 1 to travel outside the constant relative speed line d (which corresponds to a relative speed of 60 km/h), instead of changing the target speed (60 km/h) of the target traveling course R. In this case, the ECU 10 operates to correct the target traveling course R such that the target positions are changed to positions on or outside the constant relative speed line d, while maintain the target speed of the target traveling course R, thereby forming the corrected target traveling course Rc3. Thus, the target speed of the corrected target traveling course Rc3 is maintained at 60 km/h which is the target speed of the target traveling course R.

The corrected target traveling course (corrected traveling course candidate) Rc2 is a course set by changing both the target positions and the target speed of the target traveling course R. In the corrected target traveling course Rc2, instead of maintaining the target speed at 60 km/h, the target speed is gradually reduced as the vehicle 1 approaches the parked vehicle 3, and then gradually increased to 60 km/h as the original speed, as the vehicle 1 travels away from the parked vehicle 3.

More specifically, as shown in FIG. 4, the ECU 10 functions as a target traveling course computing part (course calculation part) 10a to calculate the target traveling course R, based on the sensor information, etc. Then, upon detection of an obstacle, the ECU 10 (target traveling course computing part 10a) is operable to calculate a plurality of corrected traveling course candidates (e.g., Rc1 to Rc3) through traveling course correction processing as described above. In this embodiment, the traveling course correction processing is optimization processing using an evaluation function J.

The ECU10 stores the evaluation function J, a limiting condition and a vehicle model in the memory. The ECU 10 is operable, in the traveling course correction processing, to derive one corrected traveling course from the corrected traveling course candidates which is the smallest in terms of the evaluation function J, while satisfying the limiting condition and the vehicle model (optimization processing).

The evaluation function J has a plurality of evaluation factors. In this embodiment, the evaluation factors are functions for evaluating differences between the target traveling course and each of the plurality of corrected traveling course candidates, in terms of, e.g., speed (longitudinal and lateral speeds), acceleration (longitudinal and lateral accelerations), acceleration change rate (longitudinal and lateral acceleration change rates), yaw rate, lateral offset with respect to the middle of a lane, vehicle angle, steering angle, and other software limitations.

The evaluation factors include evaluation factors regarding a longitudinal behavior of the vehicle 1 (longitudinal evaluation factors: longitudinal speed, longitudinal acceleration, longitudinal acceleration rate, etc.), and evaluation factors regarding a lateral behavior of the vehicle 1 (lateral evaluation factors: lateral speed, lateral acceleration, lateral acceleration rate, yaw rate, lateral offset with respect to the middle of a lane, vehicle angle, steering angle, etc.).

Specifically, the evaluation function J is expressed as the following formula:

$$ J = \sum_{0}^{N} \left\{ W_1 (X_1 - X_{ref1})^2 + W_2 (X_2 - X_{ref2})^2 + \cdots + W_n (X_n - X_{refn})^2 \right\} $$

In this formula, Wk (Xk - Xrefk)$^2$ denotes each of the evaluation factors, wherein: Xk denotes a physical value of the corrected traveling course candidate in regard to each of the evaluation factors; Xrefk denotes a physical value of the target traveling course (before correction) in regard to a corresponding one of the evaluation factors; and Wk denotes a weighting factor for the corresponding one of the evaluation factors (e.g., $0 \leq Wk \leq 1$) (where k is an integer of 1 to n). Thus, in this embodiment, the evaluation function J is equivalent to a value obtained by: calculating differences in respective physical amounts of n evaluation factors between a corrected traveling course candidate and a target traveling course (before correction) calculated on the assumption that there is no obstacle; weighting respective square values of the differences; and summing the weighted values over a traveling course distance corresponding to a given time period N (e.g., N = 3 sec)

The limiting condition includes at least one limiting factor for limiting the behavior of the vehicle 1. The limiting factor is associated directly or indirectly with either one of the evaluation factors. Thus, the behavior (i.e., the physical value of the associated evaluation factor) is limited by the limiting condition, so that it is possible to early converge the optimization processing based on the evaluation function J, thereby shortening a calculation time period. The limiting condition is set differently according to a selected mode of the driving support control.

In this embodiment, examples of the limiting factor include speed (longitudinal and lateral speeds), acceleration (longitudinal and lateral accelerations), acceleration change rate (longitudinal and lateral acceleration change rates), temporal deviation of vehicle speed, lateral offset with respect to the middle of a lane, temporal deviation of inter-vehicle distance, steering angle, steering angular speed, steering torque, steering torque rate, yaw rate, and vehicle angle. With respect to each of the above limiting factors, an allowable numerical range is set (e.g., $- 4\ \text{m/s}^2 \leq$ longitudinal acceleration $\leq 3\ \text{m/s}^2$, $- 5\ \text{m/s}^2 \leq$ lateral acceleration $\leq 5\ \text{m/s}^2$). For example, the longitudinal and lateral accelerations exerting a large influence on riding comfort can be limited by the limiting condition. In this case, it is possible to limit maximum values of longitudinal G and lateral G in the corrected traveling course.

The vehicle model is designed to define physical motions of the vehicle 1, and expressed as the following motion equations. In this embodiment, this vehicle model is a two-wheel vehicle model as shown in FIG. 5. The physical motions of the vehicle 1 can be defined by the vehicle model, so that it is possible to derive one corrected traveling course which is less likely to give the driver a feeling of strangeness during traveling, and early converge the optimization processing based on the evaluation function J.

$$ mV \left( \frac{d\beta}{dt} + r \right) = -2K_f \left( \beta + \frac{l_f}{V} r - \delta \right) - 2K_r \left( \beta - \frac{l_r}{V} r \right) \qquad (1) $$

$$ I \frac{dr}{dt} = -2K_f \left( \beta + \frac{l_f}{V} r - \delta \right) l_f + 2K_r \left( \beta - \frac{l_r}{V} r \right) l_r \qquad (2) $$

In FIG. 5 and the above equations, m denotes a mass of the vehicle 1; I denotes a yawing inertia moment of the vehicle 1; l denotes a wheelbase of the vehicle 1; lf denotes a distance between a center-of-gravity and a front axle of the vehicle 1; $l_r$ denotes a distance between the center-of-gravity and a rear axle of the vehicle 1; $K_f$ denotes a cornering power per front wheel of the vehicle 1; $K_r$ denotes a cornering power per rear wheel of the vehicle 1; V denotes a vehicle speed of the vehicle 1; $\delta$ denotes an actual steering angle of a front wheel of the vehicle 1 ; $\beta$ denotes a lateral slip angle at the center-of-gravity; r denotes a yaw angular speed of the vehicle 1; $\theta$ denotes a yaw angle of the vehicle 1; y denotes a lateral displacement with respect to an absolute space; and t denotes time.

The ECU 10 is operable, based on the target traveling course, the limiting condition, the vehicle model, the obstacle information, etc., to derive one corrected traveling course which is the smallest in terms of the evaluation function J, from a plurality of corrected traveling course candidates. That is, in the traveling course correction processing, the ECU 10 functions as a solver for outputting a solution of an optimization problem. Thus, the corrected traveling course to be derived as an optimal solution is selected on conditions that it most conforms to (is closest to) the target traveling course before correction, while allowing the vehicle 1 to ensure an appropriate distance and relative speed with respect to an obstacle.

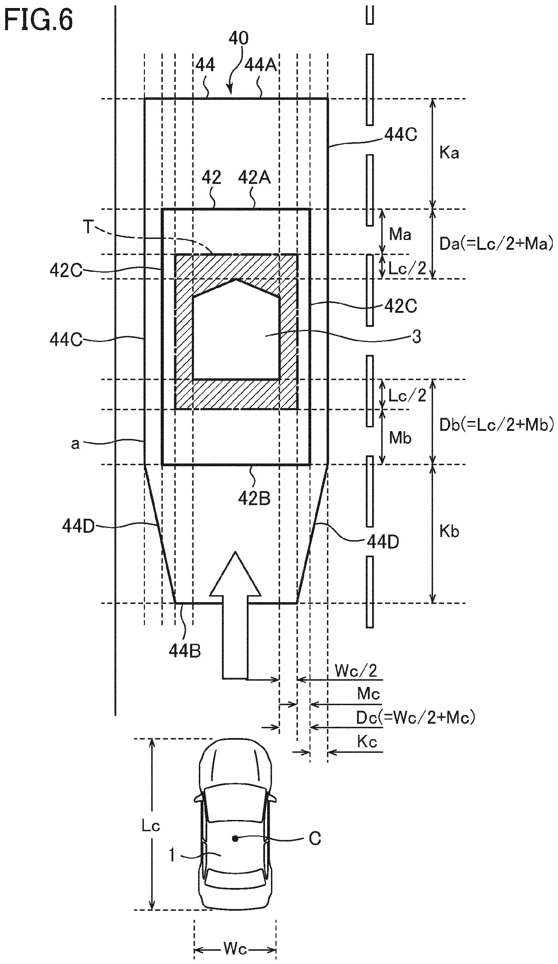

Next, with reference to FIG. 6, the entry prohibition zone (personal zone) to be set inside the speed distribution area in this embodiment will be described. FIG. 6 is an explanatory diagram of the entry prohibition zone. It should be noted here that dimensions in FIG. 6 are not exactly accurate.

As shown in FIG. 6, in the speed distribution area 40, a proximal zone (relative speed-zero zone) 44 is set in a region inside the constant relative speed line a ($V_{lim}$ = 0 km/h; zero boundary line). During execution of the automatic driving support control, the vehicle 1 is controlled not to enter inside the proximal zone 44. However, when an object suddenly changes the behavior (e.g., rapid deceleration or cut-in), the vehicle 1 is permitted to enter inside the proximal zone 44. When the vehicle 1 enters inside the proximal zone 44, the ECU 10 is operable to calculate a traveling course to allow the vehicle 1 to move away from the proximal zone 44 toward the outside, and execute vehicle speed control and/or steering control based on the calculated traveling course.

For example, when the vehicle 1 enters inside the proximal zone 44 around a preceding vehicle 3 (traveling vehicle) from behind the preceding vehicle 3, the vehicle 1 is subjected to the vehicle speed control (e.g., braking control), such that the relative speed becomes negative (i.e., the vehicle speed of the vehicle 1 becomes lower than that of the preceding vehicle 3). As a result of this control, the vehicle 1 will be located rearward of the proximal zone 44.

Further, in the proximal zone 44, the entry prohibition zone 42 is set outside the preceding vehicle 3 in spaced-apart relation to the constant relative speed line a. Differently from the proximal zone 44, the entry of the vehicle 1 into the entry prohibition zone 42 is not permitted. Thus, when, due to a sudden behavior change of the object, the vehicle 1 cuts across the constant relative speed line a and enters inside the proximal zone 44 (a safety buffer zone between the entry prohibition zone 42 and the constant relative speed line a), the ECU 10 is operable to execute the automatic driving support control so as to prevent the vehicle 1 from entering the entry prohibition zone 42. For this purpose, in the traveling course correction processing using the evaluation function J, the entry prohibition zone is set as one of the most stringent or strict condition among the liming condition (limiting factors). This makes it possible to avoid the situation where the vehicle 1 enters inside the entry prohibition zone, by executing vehicle speed control and/or steering control, when the object suddenly changes its behavior.

In this embodiment, the entry prohibition zone 42 is not set to simply ensure a distance for allowing the vehicle 1 to avoid colliding with the preceding vehicle 3 but set to ensure a distance for allowing a passenger of the vehicle 1 to feel that the vehicle 1 is driven safely, without feeling in danger, when the vehicle 1 approaches the preceding vehicle 3.

The entry prohibition zone 42 and the proximal zone 44 will be described in detail below.

As shown in FIG. 6, the entry prohibition zone 42 is a zone set around (over the entire periphery of) the preceding vehicle 3. Specifically, the entry prohibition zone 42 is a rectangular zone surrounded by a front boundary line 42A (front edge), a rear boundary line 42B (rear edge), and a pair of lateral boundary lines 42C (lateral edges) each set at a respective one of a position forward of, a position rearward of and a position laterally outward of the preceding vehicle 3.

In the following formulas, Lc denotes the overall length (longitudinal length) (m) of the vehicle 1, and Wc denotes the overall width (lateral length) (m) of the vehicle 1.

The front boundary line 42A is set at a position away from a front end of the preceding vehicle 3 by a given forward distance Da. The given forward distance Da is determined by the following formula 1.

$$Da = Lc/2 + Ma \qquad \text{- - - (1)}$$

$$Ma = k_1 Vp + k_2$$

In the formula 1, Ma denotes a safety margin (m), and Vp denotes a traveling speed (m/s) of the preceding vehicle 3 (the absolute vehicle speed in the traveling direction of the vehicle 1). Further, $k_1$ denotes a speed coefficient, and $k_2$ denotes a distance coefficient. The safety margin Ma includes a speed element term ($k_1 Vp$) and a distance element term ($k_2$). The speed coefficient $k_1$ is a constant (e.g., $k_1$ = 0.5), and the distance coefficient $k_2$ is set according to the category of the object (e.g., when the object is categorized as vehicle, $k_2$ is set to 5 (m)).

The rear boundary line 42B is set at a position away from the rear end of the preceding vehicle 3 by a given rearward distance Db. The given forward distance Da is determined by the following formula 2.

$$Db = Lc/2 + Mb \qquad - - - (2)$$

$$Mb = k_3$$

In the formula 2, Mb denotes a safety margin (m), and $k_3$ denotes a distance coefficient. The safety margin Mb includes only a distance element term ($k_3$). The distance coefficient $k_3$ is set according to the category of the object (e.g., when the object is categorized as vehicle, $k_3$ is set to 2 (m)). It should be noted here that Mb also includes a speed element term.

Each of the lateral boundary lines 42C is set at a position away from a respective one of opposed lateral ends of the preceding vehicle 3 by a given lateral distance Dc. The given lateral distance Dc is determined by the following formula 3.

$$Dc = Wc/2 + Mc \qquad - - - (3)$$

$$Mc = k_4 Vp + k_5$$

In the formula 3, Mc denotes a safety margin, and $k_4$ and $k_5$ denote, respectively, a speed coefficient and a distance coefficient. The safety margin Mc includes a speed element term ($k_4 Vp$) and a distance element term ($k_5$). The speed coefficient $k_4$ is a constant (e.g., $k_4 = 0.1$), and the distance coefficient $k_5$ is set according to the category of the object (e.g., when the object is categorized as vehicle, $k_5$ is set to 0.5 (m)).

As shown in FIG. 6, a rectangular zone surrounded by two one-dot chain lines each indicated at a position spaced apart from a respective one of the front and rear ends of the preceding vehicle 3 by a distance of (Lc/2), and two one-dot chain lines each indicated at a position spaced apart from a respective one of the opposed lateral ends of the preceding vehicle 3 by a distance of (Wc/2) is set as a contact area T.

In this embodiment, a variety of calculations are performed on the assumption that the position of the vehicle 1 is at a center position C (longitudinal and lateral midpoint) of the vehicle 1. Thus, as long as the center position C of the vehicle 1 does not enter the contact zone T, the vehicle 1 never comes into contact or collision with the preceding vehicle 3.

In this embodiment, as can be understood from the formulas 1 and 2, in order to cope with a change in vehicle speed, the longitudinal safety margins Ma, Mb are set, in addition to the distance (Lc/2) set in the contact zone T. Further, as can be understood from the formula 3, in order to cope with a sudden lateral movement, a sudden opening of a vehicle door, or the like, the lateral safety margin Mc is set, in addition to the distance (Wc/2) set in the contact zone T.

Although each of the speed coefficients $k_1$, $k_4$ in this embodiment is a constant, it should be noted that each of the speed coefficients $k_1$, $k_4$ may be set such that it changes according to the vehicle speed (absolute vehicle speed) of at least one of the vehicle 1 and the preceding vehicle 3.

As shown in FIG. 6, the proximal zone (relative speed-zero zone) 44 is formed in an approximately pentagonal shape. Specifically, the relative speed-zero zone 44 is a zone surrounded by a front boundary line 44A (front edge), a rear boundary line 44B (rear edge), and a pair of lateral boundary lines 44C (lateral edges) each set at a respective one of a position forward of, a position rearward of and a position laterally outward of the preceding vehicle 3, wherein rear ends of the lateral boundary lines 44C are connected, respectively, to opposite ends of the rear boundary line 44B through two rear inclined lines 44D each extending obliquely in top plan view.

The front boundary line 44A is set at a position away from the front boundary line 42A forwardly by a given forward distance Ka. The given forward distance Ka is determined by the following formula 4.

$$Ka = k_6 \times (Vp - Vc) + k_7 \quad (\text{where } Ka \geq 0) \qquad - - - (4)$$

In the formula 4, Vc denotes a traveling speed (absolute traveling speed) of the vehicle 1. Further, each of the coefficients $k_6$, $k_7$ is a constant (e.g., $k_6 = 1$, and $k_7 = 20$ (m)). Further, when Vc > Vp, and thereby Ka < 0, Ka is set to 0.

The rear boundary line 44B is set at a position away from the rear boundary line 42B rearwardly by a given rearward distance Kb. The given rearward distance Kb is determined by the following formula 5.

$$Kb = (THW \text{ or } TTC) \times Vc + k_8 \qquad - - - (5)$$

In the formula (5), THW is an abbreviation for time headway. Further, TTC is an abbreviation for time-to-collision, and is a value obtained by dividing an inter-vehicle distance between the vehicle 1 and the preceding vehicle 3 by the relative speed of the vehicle 1 with respect to the preceding vehicle 3. In this embodiment, with regard to the term (THW or TTC), a larger one of the time headway and the time-to-collision is taken. Further, the coefficient $k_8$ is a constant (e.g., $k_8 = 2$ (m)).

Each of the lateral boundary lines 44C is set at a position away from a corresponding one of the lateral boundary lines 42C laterally by a given lateral distance Kc. The given lateral distance Kc is determined by the following formula 6.

$$K c = \sqrt{\left( \frac{(V c - V p)}{k_9} + \left( D c - W c / 2 \right)^2 \right)} \quad \cdots \quad (6)$$

In the formula 6, (Dc - Wc/2) represents a lateral distance between the entry prohibition zone 42 and the contact zone T. Thus, considering the formula 3, the given lateral distance Kc can be determined by the following formula 7.

$$K c = \sqrt{\left( \frac{(V c - V p)}{k_9} + \left( k_4 V p + k_5 \right)^2 \right)} \quad \cdots \quad (7)$$

In the formulas 6 and 7, the coefficient kg is a constant (e.g., kg = 3.29).

Each of the rear inclined lines 44D is a line connecting a virtual intersection point between a corresponding one of the lateral boundary lines 44C and an extension of the rear boundary line 42B, and a virtual intersection point between the rear boundary line 44B and an extension of a corresponding one of two lateral boundary lines of the contact zone T.

In this embodiment, the ECU 10 stores, in the memory, the above coefficients k ($k_1$ to $k_9$), other numerical values Lc, Wc and others, and is operable to set the speed distribution area 40 using the coefficients appropriate to the category of the object.

It should be understood that the present invention is not limited to the above calculation method but the speed distribution area 40 may be set based on various parameters. Examples of such parameters may include the relative speed between the vehicle 1 and an object, the travelling direction of the vehicle 1, the moving direction and the moving speed of the object, the length of the object, the absolute speed of the vehicle 1. Further, the category of the object may be taken into account. That is, coefficients k and a calculation formula may be selected based on these parameters.

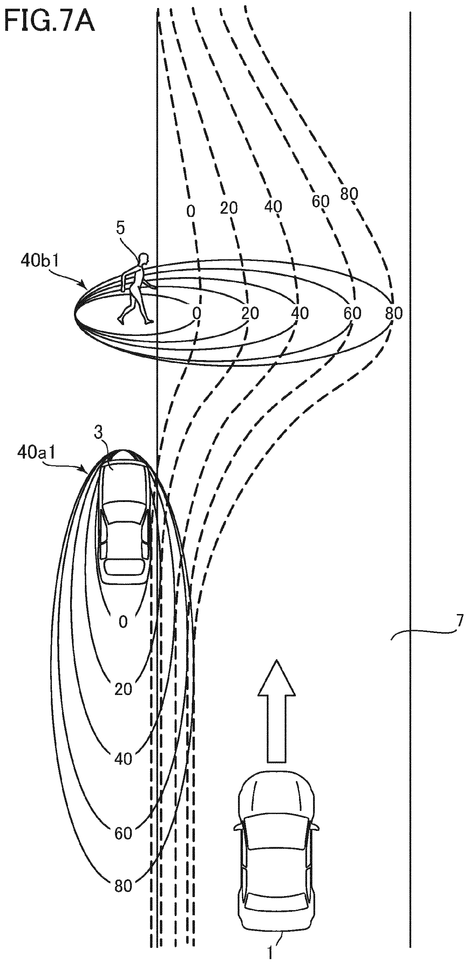

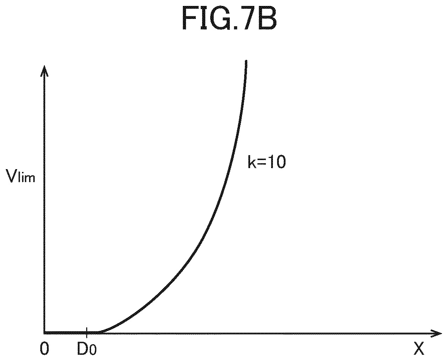

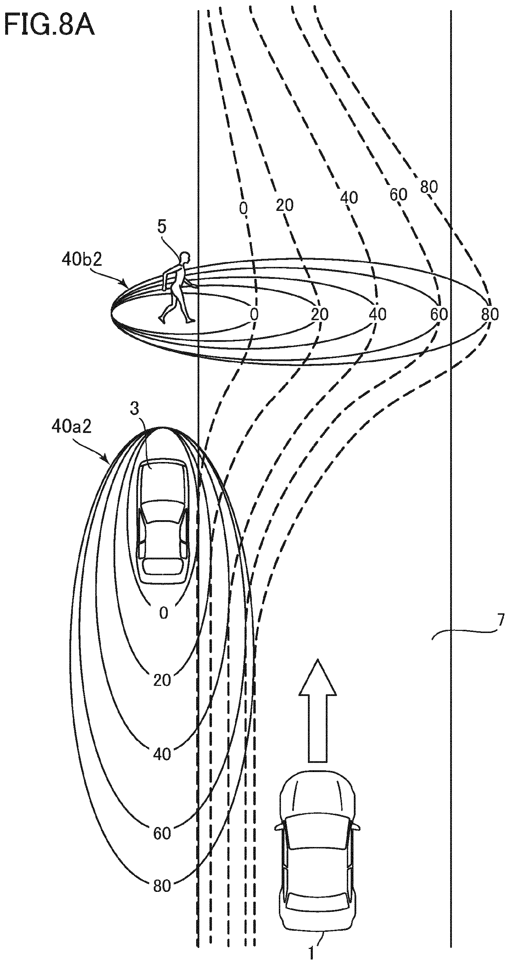

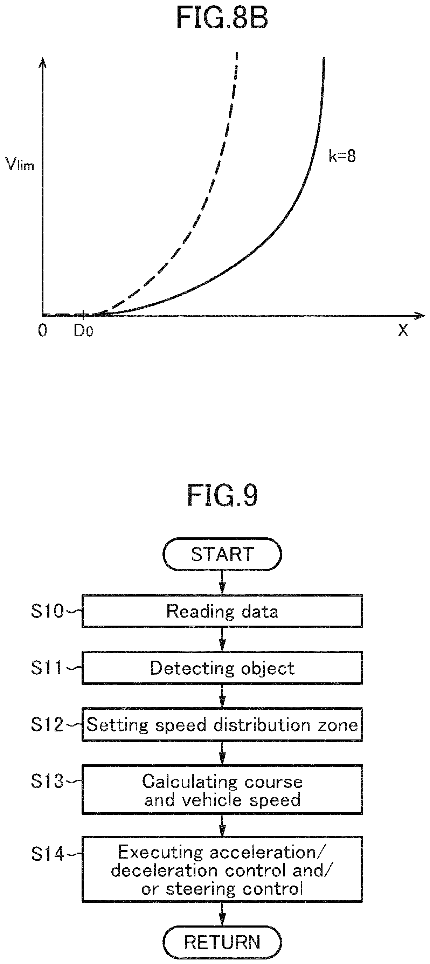

Next, with reference to FIGS. 7A to 8B, setting of the speed distribution area according to the degree of the visibility in this embodiment will be described. FIGS. 7A and 7B are explanatory diagrams of setting of the speed distribution area in a situation where the visibility is good, and FIGS. 8A and 8B are explanatory diagrams of setting of the speed distribution area in a situation where the visibility is bad. In FIGS. 7A and 8A, the speed distribution areas are simply illustrated for the sake of facilitating understanding.

In this embodiment, the situation where the visibility is good means a situation where it is easy for the driver to visually figure out a traffic environment outside the vehicle 1 (e.g., sunny daytime). On the other hand, in this embodiment, the situation where the visibility is bad means a situation where it is difficult for the driver to visually figure out the traffic environment outside the vehicle 1 (e.g., rainy weather, early-evening with lightness less than a given value/night-time).

In FIG. 7A, the vehicle 1 is traveling on the traveling road 7 in the situation where the visibility is good. Around the vehicle 1, there are a parked vehicle 3 and a pedestrian 5. The ECU 10 operates to set two speed distribution areas 40a1, 40b1 with respect to these two objects 3, 5, respectively. Further, FIG. 7A shows a plurality of rough traveling courses each applicable when maintaining a constant vehicle speed (e.g., 20 km/h, 40 km/h, 60 km/h or 80 km/h)

In FIG. 7A, at a lateral position of each of the objects, the speed distribution area is set based on the relationship ($V_{lim} = k (X - D_0)^2$) illustrated in FIG. 7B. The gain coefficient k is set to 10 (k = 10). Here, referring to FIG. 6, the safe distance Do in the lateral direction is equal to "Mc + Kc". Further, a lateral permissible distance ($X - D_0$) obtained by subtracting the safe distance Do from the lateral distance (clearance) X is equal to a distance from the constant relative speed line a to the lateral end of the vehicle 1.

Thus, in the situation where the visibility is good, the permissible upper limit of the relative speed is 10 km/h ($V_{lim} = 10$) at the lateral permissible distance of 1 m (X - Do = 1), and the permissible upper limit of the relative speed is 40 km/h ($V_{lim} = 40$) at the lateral permissible distance of 2 m ($X - D_0 = 2$).

In FIG. 8A, the vehicle 1 is traveling on the traveling road 7 in the situation where the visibility is bad. The ECU 10 operates to set two speed distribution areas 40a2, 40b2 with respect to the parked vehicle 3 and the pedestrian 5 located around the vehicle 1, respectively, wherein, at the lateral position of each of the objects 3, 5, each of the speed distribution areas 40a2, 40b2 is set based on the relationship illustrated in FIG. 8B. In this case, the gain coefficient k is set to 8 (k = 8). As the gain coefficient k is set to a smaller value, the speed distribution area is laterally spread out.

In FIG. 8B, the broken line corresponds to k = 10.

Thus, in the situation where the visibility is bad, the permissible upper limit of the relative speed is 8 km/h ($V_{lim}$ = 8) at the lateral permissible distance of 1 m (X - Do = 1), and the permissible upper limit of the relative speed is 32 km/h (Viim = 32) at the lateral permissible distance of 2 m (X - Do = 2). A value of the lateral permissible distance at which the permissible upper limit of the relative speed becomes 40 km/h ($V_{lim}$ = 40) is about 2.24 m (X - $D_0 \approx$ 2.24).

As above, for example, when the vehicle 1 overtakes the object at a relative speed of 40 km/h, the vehicle 1 can pass by a position where the lateral permissible distance is 2 m, in the situation where the visibility is good (FIG. 7), whereas, in the situation where the visibility is bad (FIG. 8), the vehicle 1 has to pass by a position where the lateral permissible distance is about 2.24 m. That is, in the situation where the visibility is bad, the vehicle 1 is limited such that it has to travel at a position further laterally away from the object.

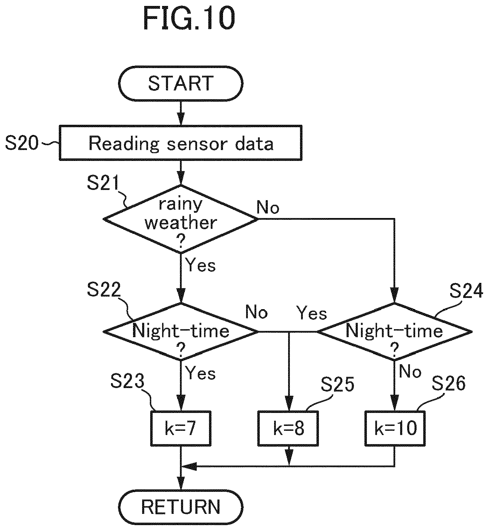

Next, with reference to FIGS. 9 and 10, the flow of processing to be executed by the vehicle control system according to this embodiment will be described. FIG. 9 is a flowchart of processing to be executed by the vehicle control device, and FIG. 10 is a flowchart of processing of setting the gain coefficient for use in setting of the speed distribution area.

As shown in FIG. 9, when the vehicle 1 is traveling on the traveling road (see FIG. 2), the ECU 10 (data acquisition part) of the vehicle 1 operates to acquire a variety of data from the plurality of sensors (S10). Specifically, the ECU 10 operates to receive, from the vehicle-mounted camera 21, image data about a forward view of the vehicle 1 captured by the vehicle-mounted camera 21, and receive measurement data from the millimeter-wave radar 22.

The ECU 10 (object detection part) operates to process data acquired from external sensors including at least the vehicle-mounted camera 21, thereby detecting an object (S11). Specifically, the ECU 10 operates to execute image processing for the image data to detect a preceding vehicle 3 as the object. Simultaneously, the category of the object is identified (in this example, identified as vehicle). Further, the ECU 10 may be configured to detect the presence of a specific obstacle from the map information.

Further, the ECU 10 (position and relative speed calculation part) operates to calculate, based on the measurement data, the position and relative speed of the detected object (preceding vehicle 3) with respect to the vehicle 1, and the size of the detected object. Here, the position of the object includes a longitudinal position (longitudinal distance) along the traveling direction of the vehicle 1, and a lateral position (lateral distance) along the lateral direction orthogonal to the traveling direction. As the relative speed, a relative speed contained in the measurement data may be directly used, or a component of velocity along the traveling direction may be calculated from the measurement data. Further, although a component of velocity orthogonal to the travelling direction does not necessarily have to be calculated, it may be estimated from plural pieces of measurement data and/or plural pieces of image data, as needed basis.

The ECU 10 (speed distribution area setting part) operates to set a speed distribution area 40 with respect to the detected object (i.e., the preceding vehicle 3) (S12). Then, the ECU 10 (course calculation part) operates to calculate, based on the set speed distribution area 40, a course along which the vehicle 1 can travel, and a setup vehicle speed or target speed at each position on the course (S13). Then, in order to allow the vehicle 1 to travel along the calculated course, the ECU 10 (traveling control execution part) operates to execute traveling control (S14).

The processing flow in FIG. 9 is repeatedly executed at intervals of a given time period (e.g., 0.1 sec). Thus, a course (positions and vehicle speed) to be calculated will change with time.

Further, as shown in FIG. 10, in association with the processing of setting the speed distribution area 40 (S12), the ECU 10 operates to execute processing of setting the gain coefficient k, based on the sensor information. In this gain coefficient setting processing, visibility of the driver of the vehicle 1 is estimated, and the magnitude of the gain coefficient k is set according to the degree of the estimated visibility.

Specifically, in the gain coefficient setting processing, first of all, the ECU 10 operates to read signals received from the wiper sensor 26 and the light intensity sensor 27 (S20). More specifically, the ECU 10 operates to receive the operating signal (ON signal or OFF signal) from the wiper sensor 26, and receive the measurement signal indicative of external light intensity from the light intensity sensor 27.

Subsequently, the ECU 10 operates to determine whether or not the operating signal received from the wiper sensor 26 is the ON signal (S21). When the operating signal is determined to be the ON signal (S21: YES), the ECU 10 operates to determine that an external state is rainy weather. Further, the ECU 10 operates to determine, based on the measurement signal received from the light intensity sensor 27, whether or not the external state is night-time (S22). Specifically, when the light intensity indicated by the measurement signal is equal to or less than a given value, the ECU 10 operates to determine that the exterior state is night-time (S22: YES). In this case, it is estimated that the degree of the visibility is worst. Then, the ECU 10 operates to set, based on this estimation, the gain coefficient to "7" (k = 7) (S23), and complete one cycle of this processing.

On the other hand, when the operating signal is determined to be the OFF signal (S21: NO), the ECU 10 operates to determine that the external state is fine weather (or cloudy weather). Further, the ECU 10 operates to determine, based on the measurement signal received from the light intensity sensor 27, whether or not the external state is night-time (S24). Specifically, when the light intensity indicated by the measurement signal is greater than the given value, the ECU 10 operates to determine that the exterior state is daytime (S24: NO). In this case, it is estimated that the degree of the visibility is good. Then, the ECU 10 operates to set, based on this estimation, the gain coefficient to "10" (k = 10) (S26), and complete one cycle of this processing.

Further, when the external state is determined to be rainy weather (S21: YES) and daytime (S22: NO), and when the external state is determined to be fine weather (S21: NO) and night-time (S24: YES), it is estimated that the degree of the visibility is second-worst. Then, the ECU 10 operates to set, based on this estimation, the gain coefficient to "8" (k = 8) (S25), and complete one cycle of this processing.

As above, in this embodiment, under the condition of "rainy weather and night-time", i.e., in the situation where the visibility is worst, the gain coefficient k is set to 7, and, under the condition of "rainy weather and daytime" or "fine weather and night-time", i.e., in the situation where the visibility is second-worst, the gain coefficient k is set to 8. Further, under the condition of "fine weather and daytime", i.e., in the situation where the visibility is good, the gain coefficient k is set to 10.

That is, in this embodiment, the gain coefficient k is set to a smaller value as the visibility becomes lower (worse). Thus, in this embodiment, the lateral distance (clearance) from an object at the permissible upper limit is set to a larger value as the visibility becomes lower when comparing it based on the same permissible upper limit of the relative speed. This makes it possible to realize a situation where the vehicle 1 can pass by the object in a manner allowing the driver of the vehicle 1 to feel safe and secure even if the visibility is lowered.

In this embodiment, weather is determined from the operating state of the wiper. Alternatively, an external state detection sensor may be used to wirelessly acquire weather information from the outside so as to determine weather. In this embodiment, weather is classified into only two levels: fine weather; and rainy weather. Alternatively, weather is classified into three or more levels. For example, weather may include snowing weather, foggy weather, and particulate-contaminated weather (PM 2.5, etc.).

In this embodiment, lightness is determined from the measurement data about light intensity. Alternatively, a clock may be used as an external state detection sensor to determine lightness based on season and clock time. In this case, the position measurement system 24 and the navigation system 25 may be used as additional sensors to take into account a current location. In this embodiment, lightness is classified into only two levels: night-time; and daytime. Alternatively, lightness is classified into three or more levels. Then, the gain coefficient k may be set according to a combination of two or more of the plural levels of weather and the plural levels of lightness. Further, the gain coefficient k may be changed steplessly and continuously according to the degree of the visibility.

In this embodiment, a position (the constant relative speed line a in FIG. 2) where the permissible upper limit of the relative speed is zero (0 km/h) is not influenced by a change in the visibility. Alternatively, the position of the constant relative speed line a may be changed according to the degree of the visibility. Specifically, the constant relative speed line a may be set at position farther away from the object as the visibility becomes lower.

The functions/effects of the vehicle control system according to this embodiment will be described below.

In the vehicle control system according to the above embodiment, the vehicle control device (ECU) 10 is configured to set, in at least a part of a region between the vehicle 1 and the given object (e.g., the second vehicle 3 or the pedestrian 5) around the object, the speed distribution area 40 (40a1, 40b1, 40a2, 40b2) defining a distribution area of the plurality of permissible upper limits Viim (e.g., 0, 20, 40, 60 km/h) of the relative speed of the vehicle with respect to the object, and execute vehicle speed control and/or steering control of the vehicle 1 so as to prevent the relative speed of the vehicle 1 with respect to the object from exceeding the plurality of permissible upper limits $V_{lim}$ of the relative speed defined in the speed distribution area 40, wherein the vehicle control device 10 is configured to estimate the degree of the visibility of the driver of the vehicle 1, based on external environment information (e.g., wiper operating state, light intensity) acquired by an external state detection sensor (e.g., wiper sensor 26, light intensity sensor 27) (S21, S22, S24 in FIG. 10), and change the plurality of permissible upper limits $V_{lim}$ of the relative speed in the speed distribution area 40, according to the estimated degree of the visibility.

In the vehicle control system according to this embodiment configured as above, the vehicle control device 10 is operable to change the distribution of the permissible upper limits $V_{lim}$ of the relative speed of the vehicle 1 with respect to the object in the speed distribution area 40, according to a change in visibility of the driver. This makes it possible to set a distance between the object and the vehicle 1 when the vehicle passes by the object, while taking into account the visibility.

In the vehicle control system according to this embodiment, the vehicle control device 10 is configured to set the permissible upper limit $V_{lim}$ of the relative speed at the same distance from the object in the speed distribution area 40, such that it becomes smaller as the degree of the visibility becomes lower. In a situation where the visibility is relatively low, the relative speed which allows the driver of the vehicle 1 to feel secure and safe becomes lower. Thus, in this embodiment, in the situation where the visibility is relatively low, the permissible upper limit $V_{lim}$ of the relative speed is set to a smaller value, so that it is possible to realize a situation where the vehicle 1 can pass by the object in a manner allowing the driver of the vehicle 1 to feel secure and safe even if the visibility is lowered.

In the vehicle control system according to this embodiment, the speed distribution area 40 defines the plurality of permissible upper limits $V_{lim}$ of the relative speed according to a lateral distance X from the object, and the vehicle control device 10 is configured to change a relationship between the lateral distance X from the object and each of the permissible upper limits $V_{lim}$ of the relative speed, according to the degree of the visibility (S23, S25, S26 in FIG. 10). The relative speed which allows the driver of the vehicle 1 to feel safe and secure when the vehicle 1 passes by the object relies on the lateral distance X between the object and the vehicle 1. Thus, in this embodiment, at least the relationship between the lateral distance X and the permissible upper limit $V_{lim}$ of the relative speed is changed according to the degree of the visibility, so that it is possible to appropriately define the permissible upper limit $V_{lim}$ of the relative speed according to the degree of the visibility.

In the vehicle control system according to this embodiment, the external environment information includes at least one of weather, clock time, and lightness outside the vehicle. Thus, in this embodiment, it is possible to take into account at least one of weather (rainy weather, etc.), clock time (early-evening, night-time, etc.), and lightness outside the vehicle, as a factor exerting an influence on the visibility.

LIST OF REFERENCE SIGNS

| | |
|---|---|
| 1: | vehicle |
| 3: | second vehicle (object) |
| 5: | pedestrian (object) |
| 40, 40a1, 40a2, 40b1, 40b2: | speed distribution area |
| 44: | proximal zone |
| 100: | vehicle control system |
| a, b, c, d: | constant relative speed line |
| Do: | safe distance |
| T: | contact zone |
| Ma, Mb, Mc: | safety margin |
| X: | clearance |
| R1, R2, R3: | course |

**Claims**

1.  A vehicle control system provided in a vehicle, comprising:

    an obstacle detection sensor configured to detect an object; and
    a vehicle control device configured to, when the vehicle travels around the object, set, in at least a part of a region between the vehicle and the object, a speed distribution area in which an upper-limit relative speed of the vehicle with respect to the object is set such that it becomes smaller as approaching the object, and execute vehicle speed control and/or steering control of the vehicle so as to prevent a relative speed of the vehicle with respect to the object from exceeding the upper-limit relative speed in the speed distribution area,
    wherein the vehicle control system further comprises an external state detection sensor configured to acquire external information regarding a state of an outside of the vehicle which exerts an influence on visibility of a driver of the vehicle,
    and wherein the vehicle control device is configured to estimate a degree of the visibility of the driver of the vehicle, based on the external information acquired by the external state detection sensor, and change the upper-limit relative speed in the speed distribution area, according to the estimated degree of the visibility.

2.  The vehicle control system as recited in claim 1, wherein the vehicle control device is configured to set the upper-limit relative speed at the same distance from the object in the speed distribution area, such that it becomes smaller as the degree of the visibility becomes lower.

3.  The vehicle control system as recited in claim 1 or 2, wherein
    the speed distribution area defines the upper-limit relative speed according to a lateral distance from the object, and
    the vehicle control device is configured to change a relationship between the lateral distance from the object and the upper-limit relative speed, according to the degree of the visibility.

4.  The vehicle control system as recited in any one of claims 1 to 3, wherein the external information includes at least one of weather, clock time, and lightness outside the vehicle.

# FIG.1

100

10

| 21 | Camera |
| 22 | Radar |
| 23 | Vehicle Speed Sensor |
| 24 | Position Measurement System |
| 25 | Navigation System |
| 26 | Wiper Sensor |
| 27 | Light Intensity Sensor |

ECU

Engine Control ~31

Brake Control ~32

Steering Control ~33

# FIG.2

# FIG.3

# FIG.4

# FIG.5

FIG.6

# FIG.7A

## FIG.7B

$V_{lim}$ — k=10 — 0 — $D_0$ — X

FIG.8A

# FIG.8B

# FIG.9

START

S10 — Reading data

S11 — Detecting object

S12 — Setting speed distribution zone

S13 — Calculating course and vehicle speed

S14 — Executing acceleration/ deceleration control and/ or steering control

RETURN

# FIG.10

START

S20 — Reading sensor data

S21 — rainy weather ? — No

Yes

S22 — Night-time ? — No — Yes

S24 — Night-time ?

S23 — Yes — k=7

S25 — k=8

S26 — No — k=10

RETURN

## INTERNATIONAL SEARCH REPORT

| International application No. |
| --- |
| PCT/JP2019/002167 |

### A. CLASSIFICATION OF SUBJECT MATTER

Int.Cl. B60W30/08(2012.01)i, B60T7/12(2006.01)i, B62D6/00(2006.01)i, G08G1/16(2006.01)i, B62D101/00(2006.01)n, B62D103/00(2006.01)n, B62D111/00(2006.01)n, B62D113/00(2006.01)n, B62D117/00(2006.01)n, B62D119/00(2006.01)n, B62D137/00(2006.01)n

According to International Patent Classification (IPC) or to both national classification and IPC

### B. FIELDS SEARCHED

Minimum documentation searched (classification system followed by classification symbols)

Int.Cl. B60W10/00-50/14, B60T7/12, B62D6/00, G08G1/16, B62D101/00, B62D103/00, B62D111/00, B62D113/00, B62D117/00, B62D119/00, B62D137/00

Documentation searched other than minimum documentation to the extent that such documents are included in the fields searched
Published examined utility model applications of Japan    1922-1996
Published unexamined utility model applications of Japan    1971-2019
Registered utility model specifications of Japan    1996-2019
Published registered utility model applications of Japan    1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2007-99237 A (FUJI HEAVY IND LTD.) 19 April 2007, paragraphs [0010]-[0046], fig. 3-7 (Family: none) | 1-4 |
| Y | JP 2006-256494 A (ADVICS KK) 28 September 2006, paragraphs [0017], [0031]-[0037], [0044] (Family: none) | 1-4 |
| Y | JP 2009-210401 A (TOYOTA MOTOR CORPORATION) 17 September 2009, paragraphs [0050]-[0052] (Family: none) | 1-4 |

☒ Further documents are listed in the continuation of Box C.    ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 25.02.2019 | 05.03.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

# EP 3 730 366 A1

## INTERNATIONAL SEARCH REPORT

International application No.

PCT/JP2019/002167

**C (Continuation).   DOCUMENTS CONSIDERED TO BE RELEVANT**

| Category* | Citation of document, with indication, where appropriate, of the relevant passages | Relevant to claim No. |
|---|---|---|
| Y | JP 2017-117157 A (MAZDA MOTOR CORP.) 29 June 2017, paragraphs [0020]-[0042] <br> & US 2017/0183003 A1, paragraphs [0028]-[0050] & CN 107021052 A | 1-4 |

Form PCT/ISA/210 (continuation of second sheet) (January 2015)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006218935 A